# EUROPEAN PATENT SPECIFICATION

(11) **EP 2 857 407 B1**
(45) Date of publication and mention of the grant of the patent: **01.02.2017**
(21) Application number: 14184772.3
(22) Date of filing: 15.09.2014
(51) Int. Cl.: C07F 7/18, C09J 201/10

(54) **Organosilicon compound, making method, adhesive composition, and article**
Organosiliciumverbindung, Herstellungsverfahren, Klebstoffzusammensetzung und Artikel
Composé d'organosilicium, son procédé de fabrication, composition adhésive et article

(30) Priority: 03.10.2013 JP 2013208355
(43) Date of publication of application: 08.04.2015
(73) Proprietor: Shin-Etsu Chemical Co., Ltd., Chiyoda-ku Tokyo (JP)
(72) Inventor: Hirokami, Munenao, Annaka-shi, Gunma (JP)
(74) Representative: Stoner, Gerard Patrick

(56) References cited:
- WO-A1-2011/017418
- US-A- 5 614 324
- NATALIYA KOSTENKO ET AL: "A Synthetic Route to Quaternary Pyridinium Salt-Functionalized Silsesquioxanes", INTERNATIONAL JOURNAL OF POLYMER SCIENCE, vol. 38, no. 17, 1 January 2012 (2012-01-01), pages 3941-9, XP055164389, ISSN: 1687-9422, DOI: 10.1002/anie.200454094
- LU H ET AL: "A new way to construct luminescent functionalized silicon hybrid material derived from methyldichlorosilane", JOURNAL OF PHOTOCHEMISTRY AND PHOTOBIOLOGY, A: CHEMISTRY, ELSEVIER SEQUOIA, LAUSANNE, CH, vol. 210, no. 1, 5 February 2010 (2010-02-05), pages 48-53, XP026882444, ISSN: 1010-6030, DOI: 10.1016/J.JPHOTOCHEM.2009.12.006 [retrieved on 2010-01-30]
- LEWIS L N ET AL: "PLATINUM CATALYSTS USED IN THE SILICONES INDUSTRY THEIR SYNTHESIS AND ACTIVITY IN HYDROSILYLATION", PLATINUM METALS REVIEW, LONDON, GB, vol. 41, no. 2, 1 January 1997 (1997-01-01), pages 66-75, XP008038403,

## Description

### TECHNICAL FIELD

This invention relates to a method for preparing an organosilicon compound having a hydrolysable silyl group and pyridine ring in the molecule.

### BACKGROUND

As is well known in the art, aminoalkylsilane compounds are useful as silane coupling agents, surface treating agents, textile treating agents, adhesive agents, paint additives and the like. Particularly when inorganic materials (e.g. glass fibers, metal or oxide fillers) are added to polymers for the purpose of improving their mechanical properties and heat resistance, it is known that silane coupling agents are used to improve the adhesion between the polymer and the inorganic material or the dispersion of the inorganic material. The desired properties are further enhanced by the addition of silane coupling agents.

However, a problem arises when the aminoalkylsilane compound has active hydrogen bonded to the nitrogen atom. When this aminoalkylsilane compound is mixed with a polymer having a functional group reactive with the nitrogen atom (e.g. isocyanate, epoxy or acid anhydride) or stored in admixture therewith, reaction can take place therebetween. In one case, silane-treated inorganic material is not fully dispersed. In another case, the polymer is highly crosslinked so that the polymer undergoes a viscosity buildup or is cured.

### Citation List

Patent Document 1: JP-A 2006-193595
Patent Document 2: JP-A 2012-127039

Kostenko et al. (International Journal of Polymer Science, 2012) disclose a method of preparing silsesquioxanes functionalized by quaternary pyridinium groups.

US 5,614,324 discloses a multi-layer structure having a metal foil layer, a prepreg layer, and an adhesion promoting layer of a non-epoxy group-containing hydrolysable silane possessing a heterocyclic such as an imidazole or pyrrole; acryloxy, amide or a carbon-carbon double bond-containing group such as styryl.

WO 2011/017418 discloses chromatographic material having an ionisable modifier reagent which can be various silanes.

Lu et al. (Journal of Photochemistry and Photobiology A: Chemistry, 210, 2010, 48-53) disclose the preparation of a pyridine-functionalized siloxane precursor to luminescent silicon hybrid materials.

### THE INVENTION

An object of the invention is to provide new methods of making oganosilicon compounds useful for the above purposes. The compounds have a hydrolysable silyl group and pyridine ring in the molecule. The compounds, their uses for the above purposes, adhesive compositions comprising such compounds, and articles or materials treated with the compounds or compositions are also disclosed.

The inventors have found that aminoalkylsilane compounds having only an active hydrogen-free tertiary amino group are necessary in certain cases. Of tertiary aminoalkylsilane compounds, those silane having a cyclic structure like pyridine ring are more stable than chain structure compounds. When an inorganic material treated with such an aminoalkylsilane compound is added to a polymer, the polymer is improved in mechanical properties and heat resistance. When a pyridine ring-containing silane compound is combined with a polymer, the resulting polymer has improved physical properties and finds a wider range of application. The above and other objects are attainable by introducing a hydrolysable silyl group into the pyridine ring-containing silane compound.

Herein is disclosed an organosilicon compound having the formula (1). 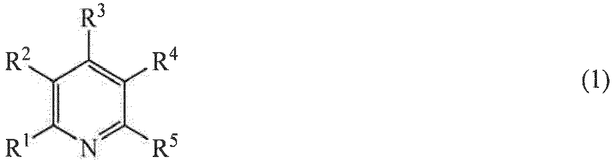 Herein R¹ to R⁵ are each independently hydrogen, an optionally substituted monovalent hydrocarbon group, or an organic group of the following formula (2), at least one of R¹ to R⁵ is an organic group of formula (2), 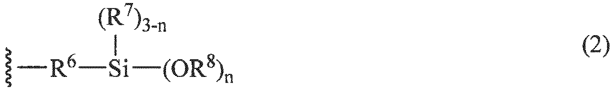 wherein R⁶ is an optionally substituted divalent hydrocarbon group, R⁷ is a C₁-C₁₀ monovalent hydrocarbon group, especially a C₁-C₁₀ alkyl or C₆-C₁₀ aryl group, R⁸ is a C₁-C₂₀ alkyl, C₂-C₁₀ alkenyl, C₆-C₁₀ aryl, C₇-C₁₀ aralkyl or C₁-C₂₀ acyl group, n is an integer of 1 to 3, and the wave line portion shows a valence bond portion.

Preferably the organic group of formula (2) has the formula (3) or (4): 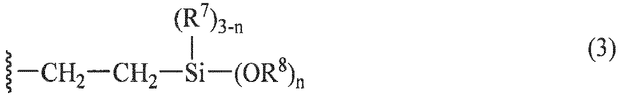 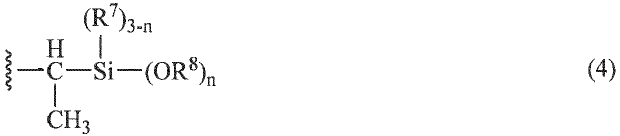 wherein R⁷, R⁸, n and the wave line portion are as defined above.

More preferred are organosilicon compounds having the following formulae (5) to (8). 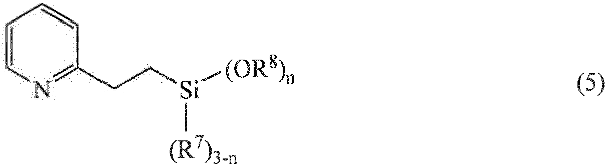 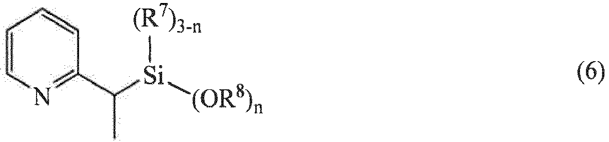 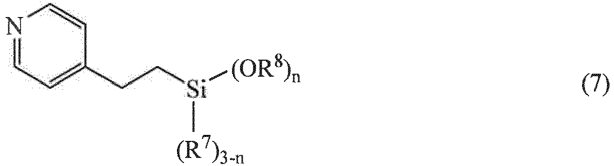 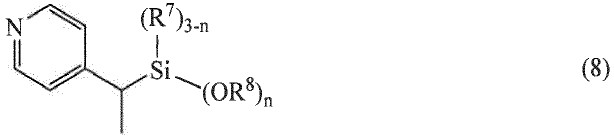 Herein R⁷, R⁸ and n are as defined above.

The invention provides a method for preparing the above organosilicon compounds of formula (1), comprising hydrosilylation reaction between an alkenyl-containing compound and a hydrogenorganosilane compound in the presence of a catalyst. The alkenyl-containing compound has the formula (9): 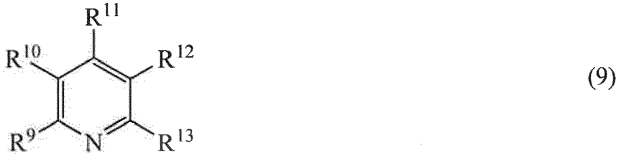 wherein R⁹ to R¹³ are each independently hydrogen or an optionally substituted monovalent hydrocarbon group, at least one of R⁹ to R¹³ is a C₂-C₁₀ alkenyl group, and the hydrogenorganosilane compound has the formula (10): 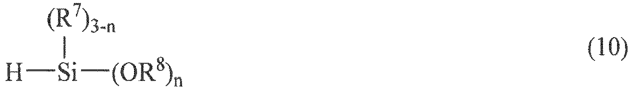 wherein R⁷, R⁸ and n are as defined above.

Preferably, the hydrosilylation reaction between the alkenyl-containing compound of formula (9) and the hydrogenorganosilane compound of formula (10) is effected in the presence of an ammonium salt of inorganic acid and a platinum compound-based catalyst. Typically, the ammonium salt is ammonium carbonate and/or ammonium hydrogencarbonate.

The disclosure also provides an adhesive composition comprising organosilicon compound of formula (1).

The disclosure also provides an article or material comprising a substrate treated with the adhesive composition defined above, and the corresponding treatment method. The substrate is typically a glass fiber member such as glass cloth, glass tape, glass mat or glass paper, an inorganic filler, a ceramic substrate or a metal substrate.

### ADVANTAGEOUS EFFECTS

The organosilicon compound having a hydrolysable silyl group and a pyridine ring per molecule is found to have the advantage that polymers having isocyanate, epoxy or acid anhydride in admixture with the organosilicon compound are shelf stable. Resins modified with an adhesive composition comprising the organosilicon compound are found to be well adherent to a wide variety of inorganic materials including glass.

### FURTHER EXPLANATIONS; OPTIONS AND PREFERENCES

As used herein, the notation "Cn-Cm" means a group containing from n to m carbon atoms per group. "Optional" or "optionally" means that the subsequently described event or circumstances may or may not occur, and that description includes instances where the event or circumstance occurs and instances where it does not. Herein, the "silane coupling agent" is encompassed in the "organosilicon compound."

In respect of numerical ranges disclosed in the present description it will of course be understood that in the normal way the technical criterion for the upper limit is different from the technical criterion for the lower limit, i.e. the upper and lower limits are intrinsically distinct proposals.

### Organosilicon compound (Silane coupling agent)

The organosilicon compound or silane coupling agent is characterized by having both the structures (i) and (ii), that is, (i) hydrolysable silyl group and (ii) pyridine ring.

The compound having both the structures (i) and (ii) may be represented by the following formula (1).

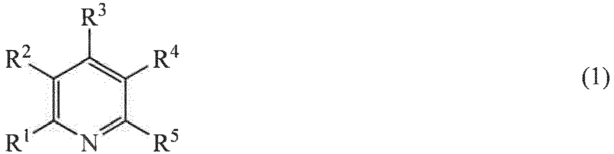

Herein R¹ to R⁵ are each independently hydrogen, an optionally substituted monovalent hydrocarbon group, or an organic group of the following formula (2), at least one of R¹ to R⁵ is an organic group of formula (2). 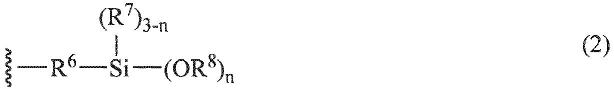 Herein R⁶ is an optionally substituted divalent hydrocarbon group, R⁷ is a C₁-C₁₀ monovalent hydrocarbon group, especially a C₁-C₁₀ alkyl or C₆-C₁₀ aryl group, R⁸ is a C₁-C₂₀ alkyl, C₂-C₁₀ alkenyl, C₆-C₁₀ aryl, C₇-C₁₀ aralkyl or C₁-C₂₀ acyl group, and n is an integer of 1 to 3. The wavy line indicates part of a valence bond.

In formula (1), any of R¹ to R⁵ may stand for monovalent hydrocarbon groups, typically having 1 to 10 carbon atoms, preferably 1 to 6 carbon atoms. Suitable hydrocarbon groups include alkyl groups such as methyl, ethyl, propyl, isopropyl, butyl, isobutyl, tert-butyl, pentyl, neopentyl, hexyl and octyl, cycloalkyl groups such as cyclohexyl, alkenyl groups such as vinyl, allyl and propenyl, aryl groups such as phenyl, tolyl, xylyl and naphthyl, and aralkyl groups such as benzyl, phenylethyl and phenylpropyl.

In formula (2), R⁶ is a divalent hydrocarbon group, typically having 1 to 10 carbon atoms, preferably 2 to 10 carbon atoms, and more preferably 2 to 6 carbon atoms. Suitable groups include alkylene groups such as methylene, ethylene, propylene, isopropylene, butylene, isobutylene, tert-butylene, pentylene, neopentylene, hexylene and octylene, cycloalkylene groups such as cyclohexylene, alkenylene groups such as vinylene, allylene and propenylene, arylene groups such as phenylene, tolylene, xylylene and naphthylene, and aralkylene groups such as benzylene, phenylethylene and phenylpropylene. Inter alia, *-CH₂CH₂-* and *-CH(CH₃)-* are preferred wherein * denotes a valence bond portion.

Notably, any of groups R¹ to R⁵ and R⁶ may have a substituent group or groups thereon. Exemplary substituent groups include groups intervening in the group structure such as ether, thioether, carbonyl, and thiocarbonyl, and substituent groups such as alkenyl, epoxy, acrylic, methacrylic, alcohol, mercapto, and amino. These may be substituted on or intervene in any of the appropriate group options mentioned above.

In formula (2), R⁷ is a monovalent hydrocarbon group having 1 to 10 carbon atoms, preferably 1 to 6 carbon atoms. Suitable groups include alkyl groups such as methyl, ethyl, propyl, isopropyl, butyl, isobutyl, tert-butyl, pentyl, neopentyl, hexyl and octyl, cycloalkyl groups such as cyclohexyl, alkenyl groups such as vinyl, allyl and propenyl, aryl groups such as phenyl, tolyl, xylyl and naphthyl, and aralkyl groups such as benzyl, phenylethyl and phenylpropyl. R⁷ is preferably an alkyl group having 1 to 10 carbon atoms or an aryl group having 6 to 10 carbon atoms. Inter alia, methyl, ethyl and phenyl are preferred.

R⁸ is an alkyl group having 1 to 20 carbon atoms, an alkenyl group having 2 to 10 carbon groups, an aryl group having 6 to 10 carbon atoms, an aralkyl group having 7 to 10 carbon atoms, or an acyl group having 1 to 20 carbon atoms. Suitable groups include alkyl groups such as methyl, ethyl, propyl, isopropyl, butyl, isobutyl, tert-butyl, pentyl, neopentyl, hexyl and octyl, cycloalkyl groups such as cyclohexyl, alkenyl groups such as vinyl, allyl and propenyl, aryl groups such as phenyl, tolyl, xylyl and naphthyl, and aralkyl groups such as benzyl, phenylethyl and phenylpropyl. Inter alia, methyl and ethyl are preferred.

The, each or an organic group of formula (2) preferably has the formula (3) or (4): 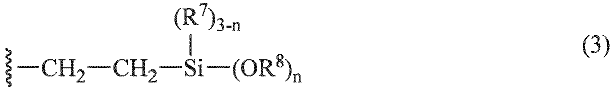 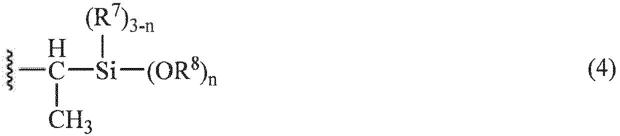 wherein R⁷, R⁸, n and the wavy line portion are as defined above.

There may be a single group of formula (2). The group of formula (2) may be at the 2 or 4 position, e.g. as shown below. Groups R¹ to R⁵ which are not of formula (2) may all be hydrogen.

Of the organosilicon compounds of formula (1), those having the formulae (5) to (8) are more preferred. 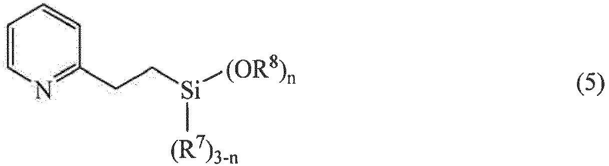 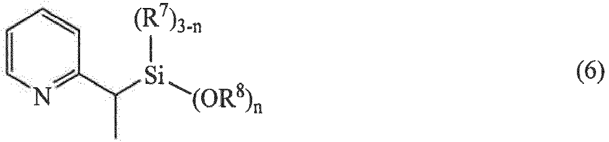 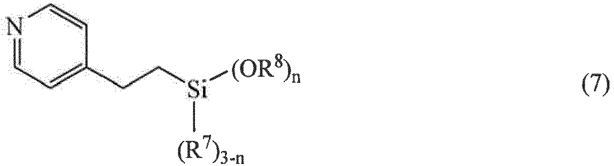 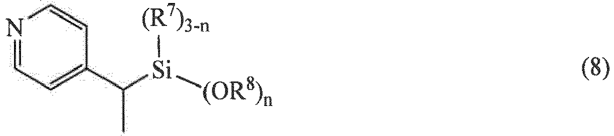 Herein R⁷, R⁸ and n are as defined above.

Of the organosilicon compounds, those having the formulae (11) to (14) are most preferred.

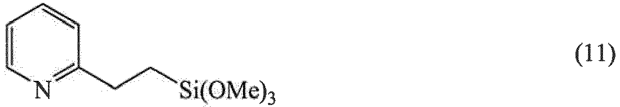

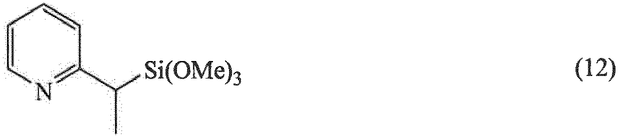

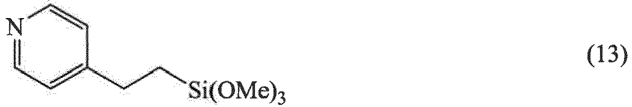

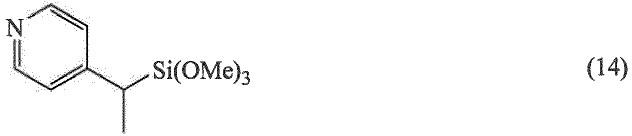

The desired organosilicon compound is obtainable from hydrosilylation reaction between an alkenyl-containing compound having the formula (9): 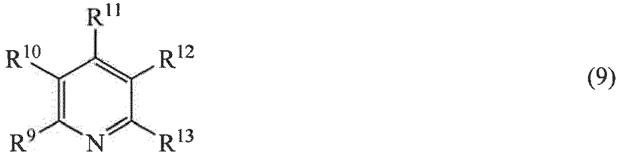 wherein R⁹ to R¹³ are each independently hydrogen or an optionally substituted monovalent hydrocarbon group, at least one of R⁹ to R¹³ is a C₂**-**C₁₀ alkenyl group, and a hydrogenorganosilane compound having the formula (10): 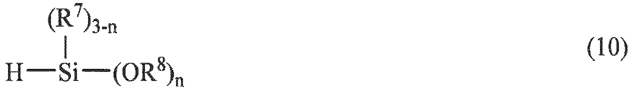 wherein R⁷, R⁸ and n are as defined above, in the presence of a catalyst.

Specifically, the hydrosilylation reaction between the alkenyl-containing compound of formula (9) and the hydrogenorganosilane compound of formula (10) is effected in the presence of an ammonium salt of inorganic acid and a platinum-containing catalyst.

In formula (9), R⁹ to R¹³ may stand for monovalent hydrocarbon groups, typically having 1 to 10 carbon atoms, preferably 1 to 6 carbon atoms. Suitable hydrocarbon groups include alkyl groups such as methyl, ethyl, propyl, isopropyl, butyl, isobutyl, tert-butyl, pentyl, neopentyl, hexyl and octyl, cycloalkyl groups such as cyclohexyl, alkenyl groups such as vinyl, allyl and propenyl, aryl groups such as phenyl, tolyl, xylyl and naphthyl, and aralkyl groups such as benzyl, phenylethyl and phenylpropyl. While the foregoing groups may be substituted ones, exemplary substituent groups include ether, thioether, carbonyl, thiocarbonyl, alkenyl, epoxy, acrylic, methacrylic, alcohol, mercapto, and amino groups.

Examples of the alkenyl-containing compound of formula (9) include, but are not limited to, 2-vinylpyridine, 3-vinylpyridine, 4-vinylpyridine, 2-allylpyridine, 3-allylpyridine, 4-allylpyridine, 2-vinyl-4-methylpyridine, and 2-vinyl-4-methoxypyridine. Inter alia, 2-vinylpyridine and 4-vinylpyridine are preferred from the aspect of cost.

For reaction, the alkenyl-containing compound of formula (9) and the hydrogenorganosilane compound of formula (10) are preferably used in a molar ratio between 1:0.5 and 1:3.0, more preferably between 1:0.8 and 1:1.2.

A catalyst is used to promote hydrosilylation reaction. Suitable catalysts are heavy metal complexes including complexes of palladium, platinum, and rhodium, with the platinum complexes being preferred from the aspects of reactivity and amount.

The platinum-containing catalyst used herein is not particularly limited. Suitable catalysts include chloroplatinic acid, alcohol solutions of chloroplatinic acid, toluene or xylene solution of platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, and dichloro(cyclooctadiene)platinum, as well as supported catalysts such as platinum-on-carbon, platinum-on-alumina, and platinum-on-silica. From the selectivity aspect, zero-valent platinum complexes are preferred, with the toluene or xylene solution of platinum(0)-1,3-divinyl-1,1,3,3-tetramethyldisiloxane complex being more preferred.

The amount of the platinum-containing catalyst used is not particularly limited. For reactivity and productivity, the platinum-containing catalyst is preferably used in such amounts as to give 1×10⁻⁷ to 1×10⁻² mole, more preferably 1×10⁻⁷ to 1×10⁻³ mole, and even more preferably 1×10⁻⁶ to 1×10⁻³ mole of platinum atom per mole of the alkenyl-containing compound of formula (9).

Examples of the ammonium salt of inorganic acid include ammonium chloride, ammonium sulfate, ammonium amidosulfonate, ammonium nitrate, monoammonium dihydrogenphosphate, diammonium hydrogenphosphate, triammonium phosphate, ammonium hypophosphite, ammonium carbonate, ammonium hydrogencarbonate, ammonium sulfide, ammonium borate, and ammonium borofluoride. Inter alia, ammonium salts of inorganic acid having a pKa value of at least 2 are preferred, and ammonium carbonate and ammonium hydrogencarbonate are most preferred.

The amount of the ammonium salt of inorganic acid used is not particularly limited. For reactivity, selectivity and cost, the ammonium salt of inorganic acid is preferably used in an amount of 1×10⁻⁵ to 1×10⁻¹ mole, more preferably 1×10⁻⁴ to 5×10⁻² mole per mole of the alkenyl-containing compound of formula (9).

Although the hydrosilylation reaction may take place even in a solventless system, a solvent may be used. Suitable solvents include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as N,N-dimethylformamide; and chlorinated hydrocarbon solvents such as dichloromethane and chloroform, which may be used alone or in admixture of two or more.

In the method of the invention, the reaction temperature is not particularly limited. The reaction may be effected at room temperature or elevated temperature. The preferred reaction temperature is in the range of 0 to 200°C, more preferably 40 to 110°C, and even more preferably 40 to 90°C because heating is effective to drive the reaction at an appropriate rate. The reaction time, which is not particularly limited, is preferably 1 to 60 hours, more preferably 1 to 30 hours, and even more preferably 1 to 20 hours.

The organosilicon compound obtained by the method may be purified prior to use, depending on a quality desired in the intended application, by any of purifying techniques such as distillation, filtration, washing, column separation and solid adsorbents. Preferably the distillation purifying technique is used to remove minor amounts of catalyst and impurities until a high purity is reached.

Also disclosed herein is an adhesive composition comprising the organosilicon compound having formula (1). A typical adhesive composition may comprise the pyridine-bearing organosilicon compound of formula (1), an inorganic material, and a low molecular weight compound or a high molecular weight compound (i.e., polymer), and optionally a solvent. In the composition, the pyridine-bearing organosilicon compound of formula (1) may be bonded to these materials or solvent via reactions.

In the adhesive composition, the amount of the organosilicon compound of formula (1) is not particularly limited. If the amount of the organosilicon compound is too small, the desired effect may not be exerted. An extra amount is economically disadvantageous. It is preferred from the aspects of improved adhesion and cost to use the organosilicon compound in an amount of 0.001 to 50% by weight, more preferably 0.1 to 10% by weight based on the composition.

Also preferably, the organosilicon compound of formula (1) is dissolved in a solvent prior to use. Although the solvent used herein is not particularly limited, suitable solvents include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as acetonitrile and N,N-dimethylformamide; protic polar solvents such as alcohols and water; and halogenated hydrocarbon solvents such as dichloromethane and chloroform, which may be used alone or in admixture of two or more.

Also, an acid or base may be used as the pH adjustor. The composition is preferably adjusted to pH 2 to 13, especially pH 3 to 12.

The adhesive composition may further comprise a polymerizable monomer (or low molecular weight compound) which dissolves the organosilicon compound and/or is dissolved in the solvent. The low molecular weight compound typically has a molecular weight of up to 1,000. When low molecular weight compounds have a functional group, suitable functional groups include radical polymerizable groups such as hydroxyl, carbonyl, carboxyl, amino, thiol, cyano, sulfonyl, nitro, isocyanate, isothiocyanate, silyl, sulfide bond, amide bond, urea bond, ester bond, siloxane bond, vinyl, and acrylic group; cation polymerizable groups such as cyclic ether and vinyl ether; ring-opening metathesis polymerizable groups such as norbornenyl and dicyclopentadienyl. The number of functional groups is not particularly limited. The low molecular weight compounds may be used alone or in admixture of two or more.

Included are hydrocarbons of 1 to 50 carbon atoms, which may contain a chainlike, branched or cyclic structure or aromatic ring, and in which some or all hydrogen atoms may be replaced by substituents. Suitable substituent groups include radical polymerizable groups such as hydroxyl, carbonyl, carboxyl, amino, thiol, cyano, sulfonyl, nitro, isocyanate, isothiocyanate, alkylsilyl, alkoxysilyl, vinyl, and acrylic groups; cation polymerizable groups such as cyclic ether and vinyl ether; and ring-opening metathesis polymerizable groups such as norbornenyl and dicyclopentadienyl. Also a sulfide bond, amide bond, urea bond, ester bond or siloxane bond may intervene. Inclusion of two or more functional groups is acceptable.

The low molecular weight compound is preferably added in an amount of up to 99%, more preferably up to 50% by weight, and even more preferably 1 to 30% by weight of the composition.

Along with the solvent, the adhesive composition may further comprise a high molecular weight compound or polymer soluble in the solvent. Preferred are polymers having a weight average molecular weight (Mw) of more than 1,000, more preferably more than 1,000 to 100,000, and even more preferably 2,000 to 50,000, as measured by gel permeation chromatography (GPC) versus polystyrene standards. When polymers have a functional group, suitable functional groups include radical polymerizable groups such as hydroxyl, carbonyl, carboxyl, amino, thiol, cyano, sulfonyl, nitro, isocyanate, isothiocyanate, silyl, sulfide bond, amide bond, urea bond, ester bond, siloxane bond, vinyl, and acrylic group; cation polymerizable groups such as cyclic ether and vinyl ether; and ring-opening metathesis polymerizable groups such as norbornenyl and dicyclopentadienyl. The number of functional groups is not particularly limited. Polymers obtained from reaction of such functional groups are also included. The polymers may be used alone or in admixture of two or more.

Suitable polymers include naturally occurring high molecular weight compounds such as proteins, nucleic acids, lipids, polysaccharides, and natural rubber; and synthetic polymers such as phenolic resins, epoxy resins, melamine resins, urea resins, polyurethane, polyimide, polyamide-imide, polyethylene, polypropylene, polyvinyl chloride, polystyrene, polyvinyl acetate, acrylic resins, nitrile resins, isoprene resins, urethane resins, ethylene propylene resins, epichlorohydrin resins, chloroprene resins, butadiene resins, styrene-butadiene resins, polyamides, polyacetal, polycarbonate, polyphenylene ether, polyethylene terephthalate, polybutyrene terephthalate, cyclic polyolefins, polyphenylene sulfide, polytetrafluoroethylene, polysulfone, polyether sulfone, and polyether ether ketone. Copolymers and polymer alloys of two or more of the foregoing are also acceptable.

The polymer is preferably added in an amount of up to 99%, more preferably up to 50% by weight, and even more preferably 1 to 30% by weight of the composition.

Besides the foregoing components, additives such as surfactant, preservative, discoloration preventive agent, and antioxidant may be added to the adhesive composition.

A substrate may be treated with the adhesive composition. The substrate is not particularly limited. The adhesive composition is applicable to any substrates as long as e.g. they are made of inorganic materials capable of reacting with a hydrolysable silyl group to form a bond, or of organic materials, typically organic resins, capable of interaction with pyridine ring. The shape or form of substrate materials is not particularly limited. Typical inorganic materials include inorganic fillers of silicon, titanium, zirconium, magnesium, aluminum, indium, and tin, alone or complex oxide thereof, glass fiber members such as glass fibers, glass cloth, glass tape, glass mat, and glass paper, ceramic substrates, and metal substrates such as iron, aluminum, copper, silver, gold, and magnesium. Typical organic materials include epoxy resins, phenolic resins, polyimide resins, unsaturated polyester resins, paper boards, wood, solid wood, and chipboards. The substrate is not limited to these examples.

The methods of treating and curing the adhesive composition are not particularly limited. When the composition is directly applied to the substrate, suitable techniques include flow coating, dip coating, and spin coating. When the adhesive composition is added to and mixed with a resin compound comprising an untreated inorganic filler and a resin as dispersing medium, milling operation is suitable.

Typical curing conditions include heating and drying. After surface treatment, the coating is preferably heated at a temperature of 60 to 180°C, more preferably 80 to 150°C for a time of 5 minutes to 2 hours, for drying or completing solvent removal and simultaneously inducing chemical reaction of the silane coupling agent (which is the main component of the surface treating composition) with the substrate surface.

For the avoidance of doubt it is confirmed that in the general description above, in the usual way the proposal of general preferences and options in respect of different features of the compound, method, use, article or material constitutes the proposal of general combinations of those general preferences and options for the different features, insofar as they are combinable and compatible and are put forward in the same context.

### EXAMPLES

Examples of the invention are given below by way of illustration and not by way of limitation. Viscosity, specific gravity, and refractive index are measured at 25°C according to JIS Z-8803, Z-8804, and K-0062, respectively.

| | |
|---|---|
| GC analyser: | HP7820A by Agilent Technologies |
| Detector: | thermal conductivity detector (TCD) |
| Column: | HP INNOWAX19091N-033 (length 30 m × ID 0.25 mm × membrane thickness 0.15 µm) |
| Column temp.: | 40°C (1.5 min. holding) → 15°C/min → 80°C (4 min. holding), measurement time total 8.2 min. |
| Inlet temp.: | 250°C |
| Detector temp.: | 250°C |
| Carrier gas: | He |
| Carrier gas flow rate: | 1.4 mL/min |

### Synthesis of organosilicon compounds (11) and (12)

### Example 1

A 1-L separable flask equipped with a stirrer, reflux condenser, dropping funnel and thermometer was charged with 315 g (3 mol) of 2-vinylpyridine, 0.24 g (3×10⁻³ mol) of ammonium hydrogencarbonate, and a toluene solution of platinum-1,3-divinyl-1,1,3,3-tetramethyldisiloxane complex (to provide 3×10⁻⁴ mol of platinum atom). To the flask kept at an internal temperature of 75-85°C, 367 g (3 mol) of trimethoxysilane was added dropwise over 2 hours. Stirring was continued at 80°C for a further 1 hour. Analysis by gas chromatography demonstrated that a conversion of 2-vinylpyridine was 86%, and α-adduct (formula (11)) and P-adduct (formula (12)) formed in a ratio of 84:16 (GC area ratio). The resulting solution was distilled at 5 mmHg and 110°C for purification, obtaining 512 g of a colorless clear liquid having a viscosity of 3.43 mm²/s, a specific gravity of 1.077, and a refractive index of 1.4768. Analysis by ¹H-NMR attested a mixture of two organosilicon compounds having formulae (11) and (12). The resulting organosilicon compound is designated Silane A.

### Comparative Example 1

A 1-L separable flask equipped with a stirrer, reflux condenser, dropping funnel and thermometer was charged with 315 g (3 mol) of 2-vinylpyridine and a toluene solution of platinum-1,3-divinyl-1,1,3,3-tetramethyldisiloxane complex (to provide 3×10⁻⁴ mol of platinum atom). To the flask kept at an internal temperature of 75-85°C, 367 g (3 mol) of trimethoxysilane was added dropwise over 2 hours. Stirring was continued at 80°C for a further 1 hour. Analysis by gas chromatography demonstrated that a conversion of 2-vinylpyridine was 5%, and α-adduct (formula (11)) and β-adduct (formula (12)) formed in a ratio of 69:31 (GC area ratio).

### Epoxy resin in admixture with organosilicon compound

### Reference Example 2

A 100-mL beaker was charged with 20 g of an epoxy resin JER828 (Mitsubishi Chemical Corp.). With stirring, 1 g of Silane A was added. In this way, Silane A was uniformly dissolved in the epoxy resin. The resulting epoxy resin remained uniform and transparent during shelf storage at room temperature for more than one month.

### Comparative Example 2

A 100-mL beaker was charged with 20 g of an epoxy resin JER828 (Mitsubishi Chemical Corp.). With stirring, 1 g of KBM-573 (N-phenyl-3-aminopropyltrimethoxysilane, Shin-Etsu Chemical Co., Ltd.) was added. In this way, KBM-573 was uniformly dissolved in the epoxy resin. The resulting epoxy resin showed viscosity buildup and gelled during shelf storage at room temperature for one month.

### Adhesion of epoxy resin to glass filament

### Reference Example 3 and Comparative Examples 3, 4

A surface treating agent was prepared by diluting Silane A or KBM-573 (N-phenyl-3-aminopropyltrimethoxysilane, Shin-Etsu Chemical Co., Ltd.) with water and methanol to a concentration of 1% by weight. Glass filaments (diameter 20 µm) were treated with the surface treating agent and dried at 100°C for 30 minutes, obtaining surface-treated glass filaments. Onto the surface-treated glass filaments, droplets (having a diameter of several tens of µm to several hundreds of µm) of a thermosetting composition consisting of an epoxy resin JER828 (Mitsubishi Chemical Corp.) and a curing agent (triethylenetetramine) were applied such that the droplets were kept apart. The epoxy composition was cured by heating at 80°C for 1.5 hours and then at 100°C for 2 hours, forming spherical resin beads around the filament. The shear strength between the surface-treated glass filament and the epoxy resin was measured by the microdroplet method using a composite material interface property evaluating equipment HM410 (Tohei Sangyo Co., Ltd.). Provided that a filament has a diameter D (µm), a portion of the filament buried in the spherical resin bead has a length L (µm), and a load F (mN) is required to withdrawn the resin bead from the filament in an axial direction, the shear strength τ (MPa) per unit area is computed as τ = F/πDL. The main component of the surface treating agent is shown in Table 1 together with shear strength measurements.

**Table 1**

| | Main component of surface treating agent | Shear strength (MPa) |
|---|---|---|
| Reference Example 3 | Silane A | 37.2 |
| Comparative Example 3 | KBM-573 | 34.5 |
| Comparative Example 4 | not added (not treated) | 33.7 |

The test results demonstrate that when a filament is surface modified with an adhesive composition prepared according to the invention, the adhesion of the filament to the epoxy resin is significantly enhanced.

## Claims

1. A method for preparing an organosilicon compound having the formula (1) : 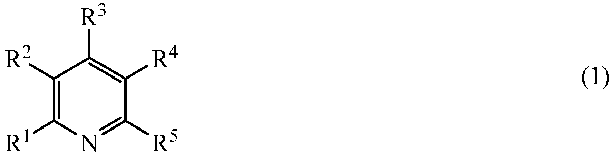 wherein each of R¹ to R⁵ independently is hydrogen, an optionally substituted monovalent hydrocarbon group or an organic group of the following formula (2), provided that at least one of R¹ to R⁵ is an organic group of formula (2): 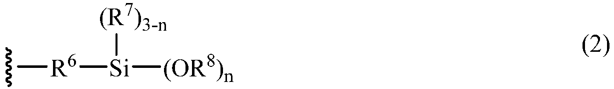 wherein R⁶ is an optionally substituted divalent hydrocarbon group, R⁷ is a C₁-C₁₀ monovalent hydrocarbon group, R⁸ is a C₁-C₂₀ alkyl, C₂-C₁₀ alkenyl, C₆-C₁₀ aryl, C₇-C₁₀ aralkyl or C₁-C₂₀ acyl group, n is an integer of 1 to 3, and the wave line portion shows a valence bond portion,
the method comprising hydrosilylation reaction between an alkenyl-containing compound and a hydrogenorganosilane compound in the presence of an ammonium salt of inorganic acid and a platinum compound-based catalyst ,
the alkenyl-containing compound having the formula (9): 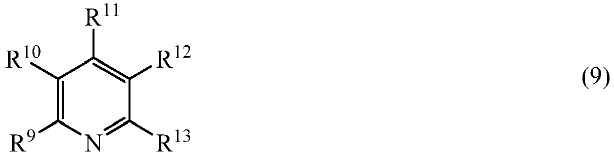 wherein R⁹ to R¹³ are each independently hydrogen or an optionally substituted monovalent hydrocarbon group, at least one of R⁹ to R¹³ is a C₂-C₁₀ alkenyl group, and
the hydrogenorganosilane compound having the formula (10) : 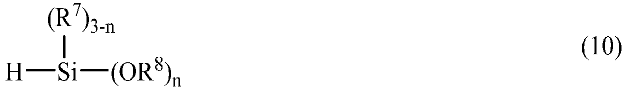 wherein R⁷, R⁸ and n are as defined above.

2. A method of claim 1 wherein the ammonium salt is ammonium carbonate and/or ammonium hydrogencarbonate.

3. A method of claim 1 or claim 2, wherein the organic group of formula (2) has the formula (3): 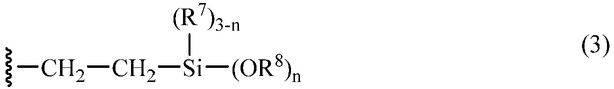 wherein R⁷, R⁸, n and the wave line portion are as defined above, or the formula (4): 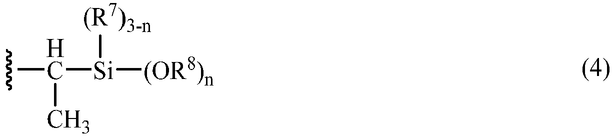 wherein R⁷, R⁸, n and the wave line portion are as defined above.

4. The method of claim 1 or 2, wherein the organosilicon compound has any one of the following formulae (5) to (8): 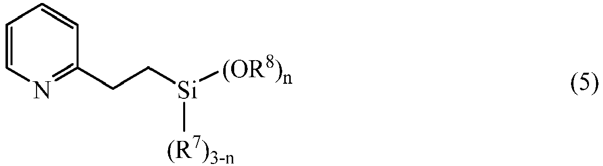 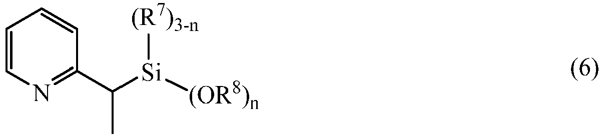 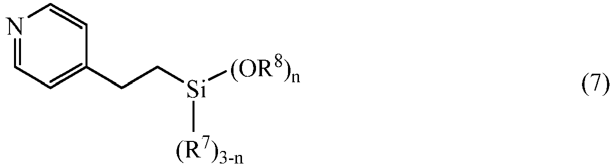 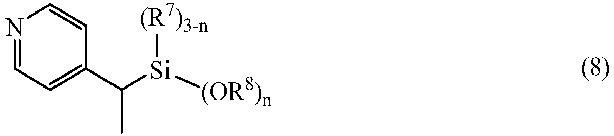 wherein R⁷, R⁸ and n are as defined above.

5. A method of any one of claims 1 to 4, wherein in formula (2), R⁶ is *-CH₂CH₂-* or *-CH(CH₃)-*, wherein * denotes a valence bond portion.

6. A method of any one of claims 1 to 5, wherein in formula (2), R⁷ is an alkyl group having 1 to 10 carbon atoms or an aryl group having 6 to 10 carbon atoms.

7. A method of any one of claims 1 to 6, wherein in formula (2) R⁸ is methyl or ethyl.

8. A method of any one of claims 1 to 7, wherein the platinum complex is a zero-valent platinum complex

9. A method of any one of claims 1 to 8, wherein the platinum-containing catalyst is used in such amounts as to give 1×10⁻⁷ to 1×10⁻² mole of platinum atom per mole of the alkenyl-containing compound of formula (9).

10. A method of any one of claims 1 to 9, wherein the ammonium salt is ammonium carbonate or ammonium hydrogencarbonate.

11. A method of any one of claims 1 to 10, wherein the ammonium salt is used in an amount of 1x10⁻⁵ to 1x10⁻¹ mole per mole of the alkenyl-containing compound of formula (9).

12. A method of any one of claims 1 to 11, wherein the alkenyl-containing compound of formula (9) and the hydrogenorganosilane compound of formula (10) are used in a molar ratio between 1:0.5 and 1:3.0.

## Patentansprüche

1. Verfahren zur Herstellung einer Organosiliciumverbindung der Formel (1): 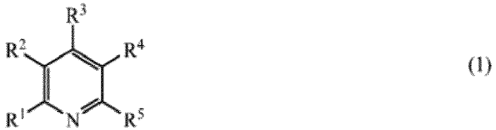 wobei jedes aus R¹ bis R⁵ unabhängig Wasserstoff, eine gegebenenfalls substituierte einwertige Kohlenwasserstoffgruppe oder eine organische Gruppe der folgenden Formel (2) ist, mit der Maßgabe, dass zumindest eines aus R¹ bis R⁵ eine organische Gruppe der Formel (2) ist: 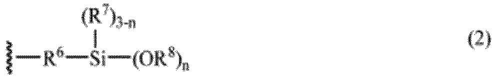 wobei R⁶ eine gegebenenfalls substituierte zweiwertige Kohlenwasserstoffgruppe ist, R⁷ eine einwertige C₁-C₁₀-Kohlenwasserstoffgruppe ist, R⁸ eine C₁-C₂₀-Alkyl-, C₂-C₁₀-Alkenyl-, C₆-C₁₀-Aryl-, C₇-C₁₀-Aralkyl- oder eine C₁-C₂₀-Acylgruppe ist, n eine ganze Zahl von 1 bis 3 ist und der Wellenlinienabschnitt einen Valenzbindungsabschnitt zeigt,
das Verfahren eine Hydrosilylierungsreaktion zwischen einer alkenyl-haltigen Verbindung und einer Hydrogenorganosilanverbindung in Gegenwart eines Ammoniumsalzes einer anorganischen Säure und eines platinverbindungsbasierten Katalysators umfasst,
die alkenyl-haltige Verbindung die Formel (9) aufweist: 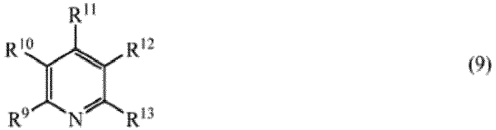 wobei R⁹ bis R¹³ jeweils unabhängig Wasserstoff oder eine gegebenenfalls substituierte einwertige Kohlenwasserstoffgruppe ist, zumindest eines aus R⁹ bis R¹³ eine C₂-C₁₀-Alkenylgruppe ist, und
die Hydrogenorganosilanverbindung die Formel (10) aufweist: 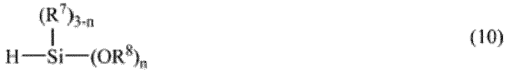 wobei R⁷, R⁸ und n wie oben definiert sind.

2. Verfahren nach Anspruch 1, wobei das Ammoniumsalz Ammoniumcarbonat und/oder Ammoniumhydrogencarbonat ist.

3. Verfahren nach Anspruch 1 oder 2, wobei die organische Gruppe der Formel (2) die Formel (3): 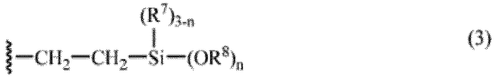 wobei R⁷, R⁸, n und der Wellenlinienabschnitt wie oben definiert sind, oder die Formel (4) aufweist: 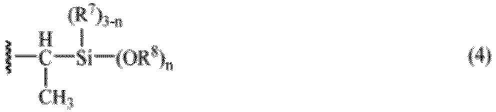 wobei R⁷, R⁸, n und der Wellenlinienabschnitt wie oben definiert sind.

4. Verfahren nach Anspruch 1 oder 2, wobei die Organosiliciumverbindung eine der folgenden Formeln (5) bis (8) aufweist: 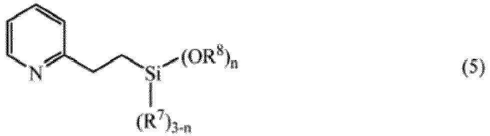 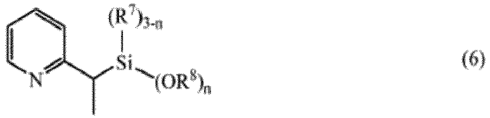 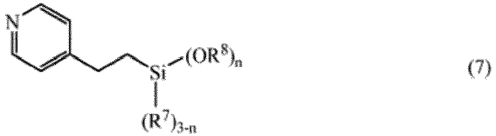 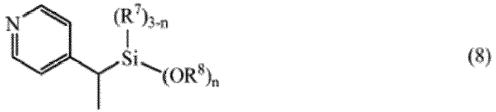 wobei R⁷, R⁸ und n wie oben definiert sind.

5. Verfahren nach einem der Ansprüche 1 bis 4, wobei in Formel (2) R₆ *-CH₂CH₂-* oder *-CH(CH₃)-* ist, wobei * für einen Valenzbindungsabschnitt steht.

6. Verfahren nach einem der Ansprüche 1 bis 5, wobei in Formel (2) R⁷ eine Alkylgruppe mit 1 bis 10 Kohlenstoffatomen oder eine Arylgruppe mit 6 bis 10 Kohlenstoffatomen ist.

7. Verfahren nach einem der Ansprüche 1 bis 6, wobei in Formel (2) R⁸ Methyl oder Ethyl ist.

8. Verfahren nach einem der Ansprüche 1 bis 7, wobei der Platinkomplex ein nullwertiger Platinkomplex ist.

9. Verfahren nach einem der Ansprüche 1 bis 8, wobei der platinhaltige Katalysator in solchen Mengen verwendet wird, um 1 x 10⁻⁷ bis 1 x 10⁻² mol Platinatom pro mol der alkenyl-haltigen Verbindung der Formel (9) zu ergeben.

10. Verfahren nach einem der Ansprüche 1 bis 9, wobei das Ammoniumsalz Ammoniumcarbonat oder Ammoniumhydrogencarbonat ist.

11. Verfahren nach einem der Ansprüche 1 bis 10, wobei das Ammoniumsalz in einer Menge von 1 x 10⁻⁵ bis 1 x 10⁻¹ mol pro mol der alkenyl-haltigen Verbindung der Formel (9) verwendet wird.

12. Verfahren nach einem der Ansprüche 1 bis 11, wobei die alkenyl-haltige Verbindung der Formel (9) und die Hydrogenorganosilanverbindung der Formel (10) in einem Molverhältnis zwischen 1:0,5 und 1:3,0 verwendet werden.

## Revendications

1. Procédé de préparation d'un composé d'organosilicium répondant à la formule (1) : 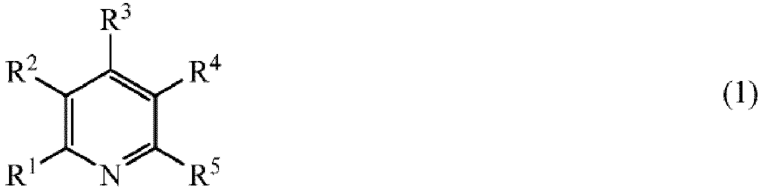 formule dans laquelle chacun de R¹ à R⁵ représente indépendamment un atome d'hydrogène, un groupe hydrocarbure monovalent facultativement substitué ou un groupe organique répondant à la formule (2) suivante, à condition qu'au moins l'un de R¹ à R⁵ soit un groupe organique de formule (2) : 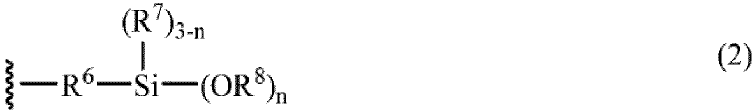 formule dans laquelle R⁶ représente un groupe hydrocarbure divalent facultativement substitué, R⁷ représente un groupe hydrocarbure monovalent en C₁ à C₁₀, R⁸ représente un groupe alkyle en C₁ à C₂₀, alcényle en C₂ à C₁₀, aryle en C₆ à C₁₀, aralkyle en C₇ à C₁₀ ou acyle en C₁ à C₂₀, n représente un nombre entier de 1 à 3, et la partie représentée par une ligne ondulée illustre une partie liaison de valence,
le procédé comprenant une réaction d'hydrosilylation entre un composé contenant un groupe alcényle et un composé hydrogénorganosilane en présence d'un sel d'ammonium d'acide inorganique et d'un catalyseur à base d'un composé contenant du platine,
le composé contenant un groupe alcényle répondant à la formule (9) : 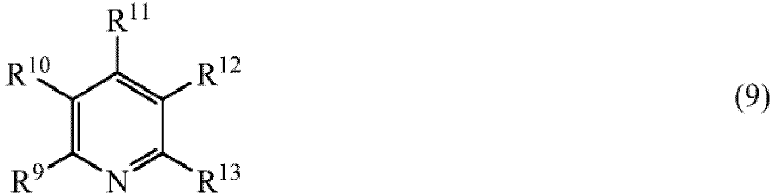 formule dans laquelle R⁹ à R¹³ représentent chacun indépendamment un atome d'hydrogène ou un groupe hydrocarbure monovalent facultativement substitué, au moins l'un de R⁹ à R¹³ est un groupe alcényle en C₂ à C₁₀, et
le composé hydrogénorganosilane répondant à la formule (10) : 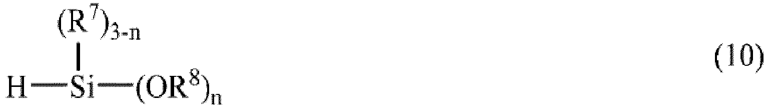 formule dans laquelle R⁷, R⁸ et n sont tels que définis ci-dessus.

2. Procédé selon la revendication 1 dans lequel le sel d'ammonium est un carbonate d'ammonium et/ou un hydrogénocarbonate d'ammonium.

3. Procédé selon la revendication 1 ou la revendication 2, dans lequel le groupe organique de formule (2) répond à la formule (3) : 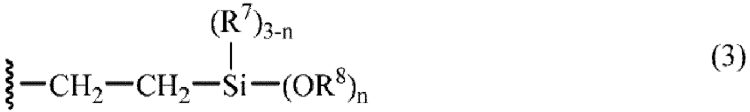 formule dans laquelle R⁷, R⁸, n et la partie représentée par une ligne ondulée sont tels que définis ci-dessus, ou la formule (4) : 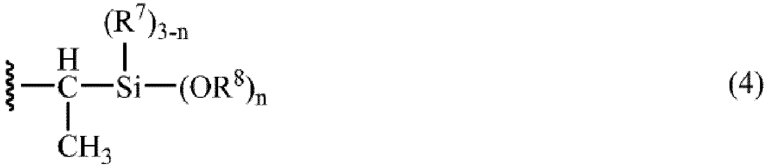 formule dans laquelle R⁷, R⁸, n et la partie représentée par une ligne ondulée sont tels que définis ci-dessus.

4. Procédé selon la revendication 1 ou 2, dans lequel le composé d'organosilicium répond à l'une quelconque des formules (5) à (8) suivantes : 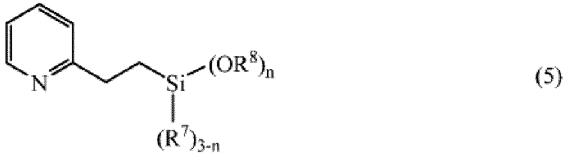 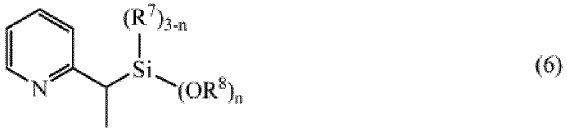 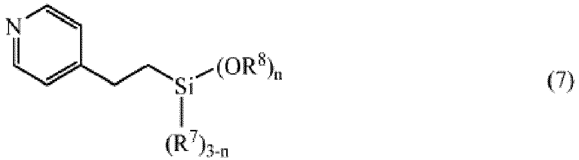 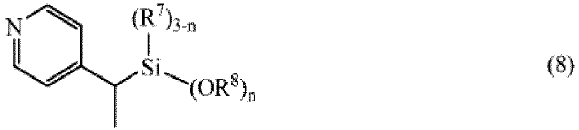 formules dans lesquelles R⁷, R⁸ et n sont tels que définis ci-dessus.

5. Procédé selon l'une quelconque des revendications 1 à 4, dans lequel dans la formule (2), R⁶ représente un groupe *-CH₂CH₂-* ou *-CH(CH₃)-*, formules dans lesquelles * désigne une partie liaison de valence.

6. Procédé selon l'une quelconque des revendications 1 à 5, dans lequel dans la formule (2), R⁷ représente un groupe alkyle comportant de 1 à 10 atomes de carbone ou un groupe aryle comportant de 6 à 10 atomes de carbone.

7. Procédé selon l'une quelconque des revendications 1 à 6, dans lequel dans la formule (2) R⁸ représente un groupe méthyle ou éthyle.

8. Procédé selon l'une quelconque des revendications 1 à 7, dans lequel le complexe à base de platine est un complexe à base de platine de valence zéro.

9. Procédé selon l'une quelconque des revendications 1 à 8, dans lequel le catalyseur contenant du platine est utilisé en des quantités permettant d'obtenir 1 x 10⁻⁷ à 1 x 10⁻² mole d'atome de platine par mole du composé contenant un groupe alcényle de formule (9).

10. Procédé selon l'une quelconque des revendications 1 à 9, dans lequel le sel d'ammonium est le carbonate d'ammonium ou l'hydrogénocarbonate d'ammonium.

11. Procédé selon l'une quelconque des revendications 1 à 10, dans lequel le sel d'ammonium est utilisé en une quantité de 1 x 10⁻⁵ à 1 x 10⁻¹ mole par mole du composé contenant un groupe alcényle de formule (9).

12. Procédé selon l'une quelconque des revendications 1 à 11, dans lequel le composé contenant un groupe alcényle de formule (9) et le composé hydrogénorganosilane de formule (10) sont utilisés dans un rapport molaire situé entre 1/0,5 et 1/3,0.
